# EUROPEAN PATENT APPLICATION

(11) **EP 4 443 966 A1**
(43) Date of publication of application: **09.10.2024**
(21) Application number: 24164171.1
(22) Date of filing: 18.03.2024
(51) Int. Cl.: H04W 36/00

(54) **APPARATUS, METHOD AND COMPUTER PROGRAM FOR LTM**

(30) Priority: 06.04.2023 GB 202305190
(71) Applicant: Nokia Technologies Oy, 02610 Espoo (FI)
(72) Inventor: SPAPIS, Panagiotis, 81475 Munich (DE); KARABULUT, Umur, 81379 Munich (DE); KAKKAVAS, Anastasios, 80331 Munich (DE); KARIMIDEHKORDI, Ali, 81545 Munich (DE); ZHANG, Xin, 82024 Taufkirchen (DE); KAINULAINEN, Jani-Pekka, Cottenham, CB24 8BA (GB); DALSGAARD, Lars, 90230 Oulu (FI)
(74) Representative: Bryers Intellectual Property Ltd

(57) **Abstract**

There is provided an apparatus comprising means for means for receiving a configuration for L3 measurement reporting at a user equipment from a network node, the configuration comprising an indication of a trigger event for reporting L3 measurements, means for performing the L3 measurements, means for determining the occurrence of the trigger event; and means for, in response to the determining, providing the L3 measurements to the network node in an L1 measurement report.

## Description

### Field

The present application relates to a method, apparatus, system and computer program and in particular but not exclusively to reporting LTM (L1/L2-Triggered Mobility) measurements to a source distributed unit (DU).

### Background

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is Universal Mobile Telecommunications System (UMTS) Terrestrial Radio Access Network (UTRAN) (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).Other examples of communication systems include 5G-Advanced (NR Rel-18 and beyond) and 6G.

### Summary

In a first aspect there is provided an apparatus comprising means for receiving a configuration for L3 measurement reporting at a user equipment from a network node, the configuration comprising an indication of a trigger event for reporting L3 measurements, means for performing the L3 measurements, means for determining the occurrence of the trigger event; and means for, in response to the determining, providing the L3 measurements to the network node in an L1 measurement report.

The configuration may further comprise an indication of candidate target cells for handover and the apparatus may comprise means for performing L1 measurements for the candidate target cells and means for providing at least one L1 measurement in the L1 measurement report.

The apparatus may comprise means for providing an indication to the network node that the L3 measurements in the L1 measurement report are L3 measurements.

The trigger event may be an L3 trigger event or L1 trigger event. The L3 measurements may comprise inter-frequency or intra-frequency measurements.

In a second aspect there is provided an apparatus comprising means for providing a configuration for L3 measurement reporting to a user equipment from a network node, the configuration comprising an indication of a trigger event for reporting L3 measurements and means for receiving at least one L3 measurement in an L1 measurement report from the user equipment at the network node.

The apparatus may comprise means for selecting a new serving cell for the user equipment on the basis of the at least one L3 measurement.

The configuration may further comprise an indication of candidate target cells for handover and the apparatus may further comprise means for receiving at least one L1 measurement for the candidate target cells in the L1 measurement report from the user equipment, and means for selecting a new serving cell for the user equipment on the basis of at least one of the at least one L3 measurement and at least one L1 measurement.

The apparatus may comprise means for selecting the new serving cell based on the at least one L3 measurement if the at least one L3 measurement is above a certain threshold, if the at least one L3 measurement is above a certain threshold and the at least one L1 measurement of a serving cell and a non serving target cell is below a threshold or if the at least one L3 measurement is above or below the at least one L1 measurement summed with a configured bias.

The apparatus may comprise means for receiving an indication at the network node from the user equipment that the L3 measurements are L3 measurements, and further comprising means for distinguishing L3 measurements from L1 measurements on the basis of the received indication.

The apparatus may be for a distributed unit of a cellular network. The trigger event may be an L3 trigger event or L1 trigger event. The L3 measurements may be inter-frequency or intra-frequency measurements.

In a third aspect there is provided an apparatus comprising means for configuring, at a network node, L3 measurement reporting for a user equipment and means for providing the configuration for L3 measurement reporting to the user equipment from the network node, the configuration comprising an indication of a trigger event for reporting L3 measurements and further comprising at least one information element configuring the user equipment to report L3 measurements in an L1 measurement report from the user equipment.

The trigger event may be an L3 trigger event or L1 trigger event. The L3 measurements may be inter-frequency or intra-frequency measurements. The apparatus may be for a centralised unit of a cellular network.

In a fourth aspect there is provided a method comprising receiving a configuration for L3 measurement reporting at a user equipment from a network node, the configuration comprising an indication of a trigger event for reporting L3 measurements, performing the L3 measurements, determining the occurrence of the trigger event; and, in response to the determining, providing the L3 measurements to the network node in an L1 measurement report.

The configuration may further comprise an indication of candidate target cells for handover and the method may comprise performing L1 measurements for the candidate target cells and providing at least one L1 measurement in the L1 measurement report.

The method may comprise providing an indication to the network node that the L3 measurements in the L1 measurement report are L3 measurements. The trigger event may be an L3 trigger event or L1 trigger event. The L3 measurements may comprise inter-frequency or intra-frequency measurements.

In a fifth aspect there is provided a method comprising providing a configuration for L3 measurement reporting to a user equipment from a network node, the configuration comprising an indication of a trigger event for reporting L3 measurements and receiving at least one L3 measurement in an L1 measurement report from the user equipment at the network node.

The method may comprise selecting a new serving cell for the user equipment on the basis of the at least one L3 measurement.

The configuration may further comprise an indication of candidate target cells for handover and the method may further comprise receiving at least one L1 measurement for the candidate target cells in the L1 measurement report from the user equipment, and selecting a new serving cell for the user equipment on the basis of at least one of the at least one L3 measurement and at least one L1 measurement.

The method may comprise selecting the new serving cell based on the at least one L3 measurement if the at least one L3 measurement is above a certain threshold, if the at least one L3 measurement is above a certain threshold and the at least one L1 measurement of a serving cell and a non serving target cell is below a threshold or if the at least one L3 measurement is above or below the at least one L1 measurement summed with a configured bias.

The method may comprise receiving an indication at the network node from the user equipment that the L3 measurements are L3 measurements, and distinguishing L3 measurements from L1 measurements on the basis of the received indication.

The apparatus may be for a distributed unit of a cellular network. The trigger event may be an L3 trigger event or L1 trigger event. The L3 measurements may be inter-frequency or intra-frequency measurements.

In a sixth aspect there is provided a method comprising configuring, at a network node, L3 measurement reporting for a user equipment and providing the configuration for L3 measurement reporting to the user equipment from the network node, the configuration comprising an indication of a trigger event for reporting L3 measurements and further comprising at least one information element configuring the user equipment to report L3 measurements in an L1 measurement report from the user equipment.

The trigger event may be an L3 trigger event or L1 trigger event. The L3 measurements may be inter-frequency or intra-frequency measurements. The apparatus may be for a centralised unit of a cellular network.

In a seventh aspect there is provided an apparatus comprising at least one processor and at least one memory storing instructions that, when executed by the at least one processor, cause the apparatus at least to receive a configuration for L3 measurement reporting at a user equipment from a network node, the configuration comprising an indication of a trigger event for report L3 measurements, perform the L3 measurements, determine the occurrence of the trigger event and in response to the determining, provide the L3 measurements to the network node in an L1 measurement report.

The configuration may further comprise an indication of candidate target cells for handover and the apparatus may be caused to perform L1 measurements for the candidate target cells and provide at least one L1 measurement in the L1 measurement report.

The apparatus may be caused to provide an indication to the network node that the L3 measurements in the L1 measurement report are L3 measurements. The trigger event may be an L3 trigger event or L1 trigger event. The L3 measurements may comprise inter-frequency or intra-frequency measurements.

In an eighth aspect there is provided an apparatus comprising at least one processor and at least one memory storing instructions that, when executed by the at least one processor, cause the apparatus at least to provide a configuration for L3 measurement reporting to a user equipment from a network node, the configuration comprising an indication of a trigger event for reporting L3 measurements and receive at least one L3 measurement in an L1 measurement report from the user equipment at the network node. The apparatus may be caused to select a new serving cell for the user equipment on the basis of the at least one L3 measurement.

The configuration may further comprise an indication of candidate target cells for handover and the apparatus may be caused to receive at least one L1 measurement for the candidate target cells in the L1 measurement report from the user equipment, and select a new serving cell for the user equipment on the basis of at least one of the at least one L3 measurement and at least one L1 measurement.

The apparatus may be caused to select the new serving cell based on the at least one L3 measurement if the at least one L3 measurement is above a certain threshold, if the at least one L3 measurement is above a certain threshold and the at least one L1 measurement of a serving cell and a non serving target cell is below a threshold or if the at least one L3 measurement is above or below the at least one L1 measurement summed with a configured bias.

The apparatus may be caused to receive an indication at the network node from the user equipment that the L3 measurements are L3 measurements, and further to distinguish L3 measurements from L1 measurements on the basis of the received indication.

The apparatus may be for a distributed unit of a cellular network. The trigger event may be an L3 trigger event or L1 trigger event. The L3 measurements may be inter-frequency or intra-frequency measurements.

In a ninth aspect there is provided an apparatus comprising at least one processor and at least one memory storing instructions that, when executed by the at least one processor, cause the apparatus at least to configure, at a network node, L3 measurement reporting for a user equipment and provide the configuration for L3 measurement reporting to the user equipment from the network node, the configuration comprising an indication of a trigger event for reporting L3 measurements and further comprising at least one information element configuring the user equipment to report L3 measurements in an L1 measurement report from the user equipment.

The trigger event may be an L3 trigger event or L1 trigger event. The L3 measurements may be inter-frequency or intra-frequency measurements. The apparatus may be for a centralised unit of a cellular network.

In a tenth aspect there is provided a computer readable medium comprising instructions which, when executed by an apparatus, cause the apparatus to perform at least the following: receiving a configuration for L3 measurement reporting at a user equipment from a network node, the configuration comprising an indication of a trigger event for reporting L3 measurements, performing the L3 measurements, determining the occurrence of the trigger event and in response to the determining, providing the L3 measurements to the network node in an L1 measurement report.

The configuration may further comprise an indication of candidate target cells for handover and the apparatus may be caused to perform performing L1 measurements for the candidate target cells and providing at least one L1 measurement in the L1 measurement report.

The apparatus may be caused to perform providing an indication to the network node that the L3 measurements in the L1 measurement report are L3 measurements. The trigger event may be an L3 trigger event or L1 trigger event. The L3 measurements may comprise inter-frequency or intra-frequency measurements.

In an eleventh aspect there is provided a computer readable medium comprising instructions which, when executed by an apparatus, cause the apparatus to perform at least the following: providing a configuration for L3 measurement reporting to a user equipment from a network node, the configuration comprising an indication of a trigger event for reporting L3 measurements and receiving at least one L3 measurement in an L1 measurement report from the user equipment at the network node. The apparatus may be caused to perform selecting a new serving cell for the user equipment on the basis of the at least one L3 measurement.

The configuration may further comprise an indication of candidate target cells for handover and the apparatus may be caused to perform receiving at least one L1 measurement for the candidate target cells in the L1 measurement report from the user equipment, and selecting a new serving cell for the user equipment on the basis of at least one of the at least one L3 measurement and at least one L1 measurement.

The apparatus may be caused to perform selecting the new serving cell based on the at least one L3 measurement if the at least one L3 measurement is above a certain threshold, if the at least one L3 measurement is above a certain threshold and the at least one L1 measurement of a serving cell and a non serving target cell is below a threshold or if the at least one L3 measurement is above or below the at least one L1 measurement summed with a configured bias.

The apparatus may be caused to perform receiving an indication at the network node from the user equipment that the L3 measurements are L3 measurements, and further comprising distinguishing L3 measurements from L1 measurements on the basis of the received indication.

The apparatus may be for a distributed unit of a cellular network. The trigger event may be an L3 trigger event or L1 trigger event. The L3 measurements may be inter-frequency or intra-frequency measurements.

In a twelfth aspect here is provided a computer readable medium comprising instructions which, when executed by an apparatus, cause the apparatus to perform at least the following: configuring, at a network node, L3 measurement reporting for a user equipment and providing the configuration for L3 measurement reporting to the user equipment from the network node, the configuration comprising an indication of a trigger event for reporting L3 measurements and further comprising at least one information element configuring the user equipment to report L3 measurements in an L1 measurement report from the user equipment.

The trigger event may be an L3 trigger event or L1 trigger event. The L3 measurements may be inter-frequency or intra-frequency measurements. The apparatus may be for a centralised unit of a cellular network.

In a thirteenth aspect there is provided a non-transitory computer readable medium comprising program instructions for causing an apparatus to perform at least the method according to the third or fourth aspect.

In the above, many different embodiments have been described. It should be appreciated that further embodiments may be provided by the combination of any two or more of the embodiments described above.

### Description of Figures

Embodiments will now be described, by way of example only, with reference to the accompanying Figures in which:
FIG. 1 shows a schematic diagram of an example 5GS communication system;
FIG. 2 shows a schematic diagram of an example mobile communication device;
FIG. 3 shows a schematic diagram of an example control apparatus;
FIG. 4 shows a signalling diagram of an LTM procedure;
Figure 5 shows an example signalling diagram of activating L1 measurements using an L3 measurement report;
Figure 6 shows a flowchart of a method according to an example embodiment;
Figure 7 shows a flowchart of a method according to an example embodiment;
Figure 8 shows a flowchart of a method according to an example embodiment;
Figure 9 shows a signalling diagram according to an example embodiment.

### Detailed description

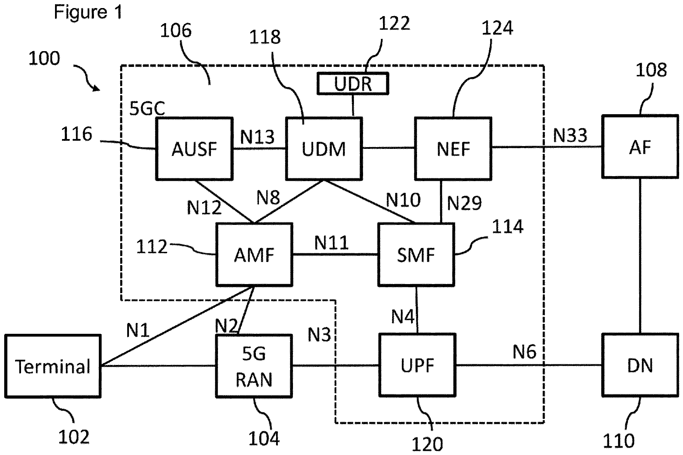

Before explaining in detail the examples, certain general principles of a wireless communication system and mobile communication devices are briefly explained with reference to FIG. 1, FIG. 2 and FIG. 3 to assist in understanding the technology underlying the described examples.

An example of a suitable communications system is the 5G or NR concept. Network architecture in NR may be similar to that of LTE-advanced. Base stations of NR systems may be known as next generation NodeBs (gNBs). Changes to the network architecture may depend on the need to support various radio technologies and finer Quality of Service (QoS) support, and some on-demand requirements for e.g. QoS levels to support Quality of Experience (QoE) for a user. Also network aware services and applications, and service and application aware networks may bring changes to the architecture. Those are related to Information Centric Network (ICN) and User-Centric Content Delivery Network (UC-CDN) approaches. NR may use Multiple Input - Multiple Output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

FIG. 1 shows a schematic representation of a 5G system (5GS) 100. The 5GS may comprise a user equipment (UE) 102 (which may also be referred to as a communication device or a terminal), a 5G radio access network (5GRAN) 104, a 5G core network (5GCN) 106, one or more internal or external application functions (AF) 108 and one or more data networks (DN) 110.

An example 5G core network (CN) comprises functional entities. The 5GCN 106 may comprise one or more Access and mobility Management Functions (AMF) 112, one or more session management functions (SMF) 114, an authentication server function (AUSF) 116, a Unified Data Management (UDM) 118, one or more user plane functions (UPF) 120, a Unified Data Repository (UDR) 122 and/or a Network Exposure Function (NEF) 124. The UPF is controlled by the SMF (Session Management Function) that receives policies from a PCF (Policy Control Function).

The CN is connected to a UE via the Radio Access Network (RAN). The 5GRAN may comprise one or more gNodeB (gNB) Distributed Unit(DU) functions connected to one or more gNodeB (gNB) Centralized Unit(CU) functions. The RAN may comprise one or more access nodes.

A User Plane Function (UPF) referred to as PDU Session Anchor (PSA) may be responsible for forwarding frames back and forth between the DN and the tunnels established over the 5G towards the UE(s) exchanging traffic with the DN.

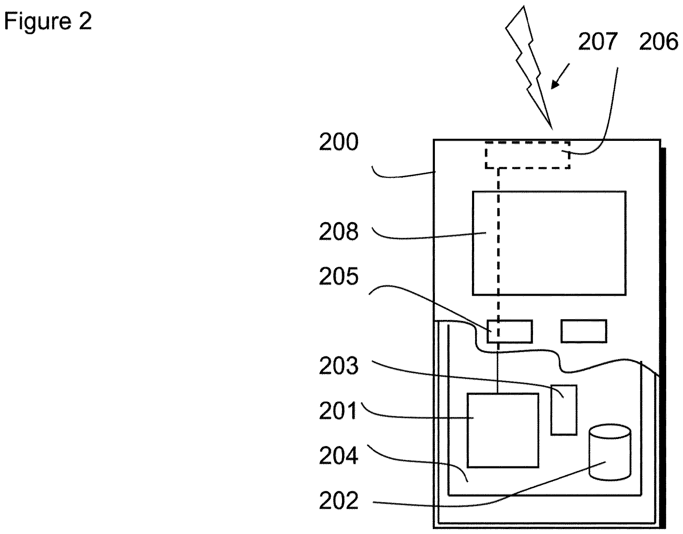

A possible mobile communication device will now be described in more detail with reference to FIG. 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, voice over IP (VoIP) phones, portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), smart devices, wireless customer-premises equipment (CPE), or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts, and other information.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The mobile device 200 may receive signals over an air or radio interface 207 via appropriate apparatus for receiving and may transmit signals via appropriate apparatus for transmitting radio signals. In FIG. 2 transceiver apparatus is designated schematically by block 206. The transceiver apparatus 206 may be provided for example by means of a radio part and associated antenna arrangement. The antenna arrangement may be arranged internally or externally to the mobile device.

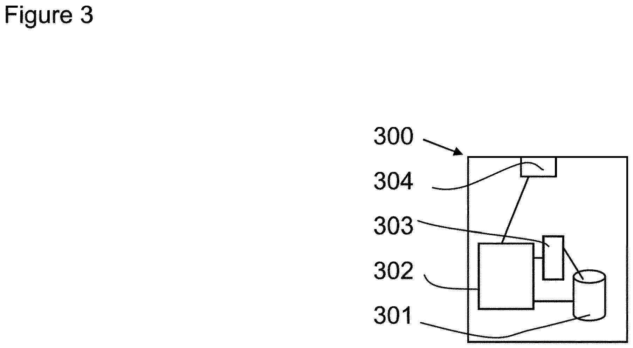

FIG. 3 shows an example of a control apparatus 300 for a communication system, for example to be coupled to and/or for controlling a station of an access system, such as a RAN node, e.g. a base station, eNB or gNB, a relay node or a core network node such as an MME or Serving Gateway (S-GW) or Packet Data Network Gateway (P-GW), or a core network function such as AMF/SMF, or a server or host. The method may be implemented in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

LTM (L1/L2-Triggered Mobility) is a procedure in which a gNB receives L1 measurement reports from UEs and, on the basis of the L1 measurement reports received from the UEs, the gNB changes the UEs' serving cell(s) through MAC CE, or other physical layer control information (e.g., DCI). The gNB prepares one or multiple candidate cells and provides the candidate cell configurations to the UE through RRC message. The LTM cell switch is then triggered, by selecting one of the candidate configurations as target configuration for LTM by the gNB. The candidate cell configurations are added, modified and released by the network via RRC signaling. LTM may provide a fast reaction time to radio link degradation in the serving link, which may result in reducing in the number of radio link failures compared to baseline handover.

In the context of the present description, the protocol layers L1, L2, L3 follow the same meaning as in the 3GPP standard specifications. L1 (Layer 1) refers to the physical layer, L2 (Layer 2) refers to the medium access control (MAC), the radio link control (RLC), and the packet data convergence protocol (PDCP) layers, and L3 (Layer 3) refers to the radio resource control (RRC) layer. LTM may thus be understood as a lower layer handover procedure where a handover command is triggered on a protocol layer below L3 (the RRC layer), e.g. on the L1 or L2.

L1 measurements have different characteristics compared to L3 measurements (e.g., L1 measurements are averaged on less samples, can be averaged on a cell basis and not on a beam basis, etc.).

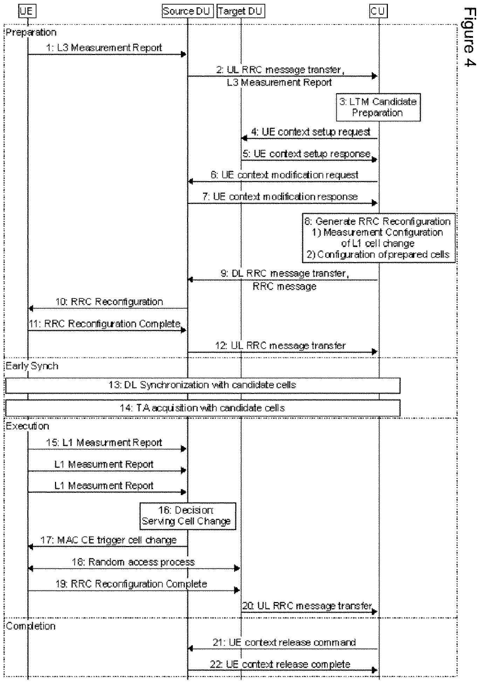

The LTM procedure can be captured in the signalling flow between a UE, source DU, target DU and CU as shown in Figure 4.

In steps 1 to 3, the UE sends a L3 Measurement Report message to the CU via the Source DU. The CU decides to use LTM and initiates LTM candidate cells preparation.

In steps 4 and 5, the CU sends a UE context setup request to the target DU for the preparation of the target cells.

In steps 6 and 7, the CU sends a UE modification setup request to the source DU for the preparation of the target cells in the source DU. Additionally this message may be used for the provision of target cell information in the Source DU.

In steps 8 to 10, the CU prepares the RRC Configuration for the LTM and provides it to the UE via the source DU. The UE may store the configuration of LTM candidate target cell(s) defined in the RRC configuration for the LTM or the RRC message itself and decode parts of it upon reception (in the latter case, once the UE receives a command to trigger cell change the UE will decode the actual target cell configuration).

In steps 11 and 12, the UE transmits a RRCReconfigurationComplete message to the CU (via the source DU).

In steps 13 and 14, the UE may perform DL synchronization and TA acquisition with candidate target cell(s) before receiving the LTM cell switch command.

In step 15, the UE performs L1 measurements on the configured LTM candidate target cell(s), and transmits lower-layer (L1) measurement reports to the source DU.

In steps 16 and 17, the source DU decides to execute LTM cell switch to a target cell, and transmits a MAC CE triggering LTM cell switch.

In step 18, the UE switches to the configuration of the LTM candidate target cell and accesses the target cell. If needed (e.g., if Timing Advance is not available), the UE performs Random Access.

In steps 19 and 20, the UE indicates successful completion of the LTM cell switch towards target cell using, e.g., an RRC Reconfiguration complete message or MAC CE acknowledgement message.

In steps 21 and 22, the UE context is released at the source DU if the CU decides accordingly.

The procedure of LTM may be applicable to both intra-frequency and inter-frequency scenarios and to both frequency ranges FR1 and FR2 of the 3GPP specifications for 5G or beyond.

For Rel-18 LTM, L1 intra- and inter-frequency measurement are supported from RAN1 point of view. SSB based L1-RSRP is supported for inter-frequency measurement from RAN1 point of view. In a single report instance, report for serving cell and candidate cell(s) for intra-frequency and/or inter-frequency may be included.

For LTM, inter-frequency scenarios in general should be supported (including mobility to inter-frequency cell that is not a current serving cell), including the support of inter-frequency L1 measurements.

Requirements for inter-frequency cell switch are to be introduced. Whether to support inter-frequency L1-RSRP measurement is for further study.

That is, the inter frequency scenario is being considered and intra and inter frequency measurements can be provided in the L1 measurement report.

From the network point of view, or from the measurement reporting point of view, LTM measurements differ from L3 Handover measurements. In L3 handover, the L3 measurements are performed over SSBs, during pre-defined SMTC window(s) (with potential measurement gap) and are transmitted to CU, which ultimately performs a handover decision and triggers the handover by RRC. In LTM, as shown in Figure 4, the source DU is responsible for performing the handover decision based on L1 measurement results, and triggers it by MAC CE or other lower layer based communication mechanism (e.g., DCI).

If UE transmit L3 measurements to the CU, the source DU is unable to utilize the L3 measurements for the LTM decision without extra inter-CU-DU signalling. The UE may need to perform L1 measurements in the execution phase to be able to transmit L1 measurement report. Based on the current LTM design, the UE may need to perform L1 measurements in LTM execution, even if it has performed L3 measurements recently. L3 and L1 measurement report formats and accuracy requirements are different. The configuration of L1 measurements is configured in different IE compared to that of L3. L1 measurements are configured on a per beam basis compared to L3 which are averaged on the target cell.

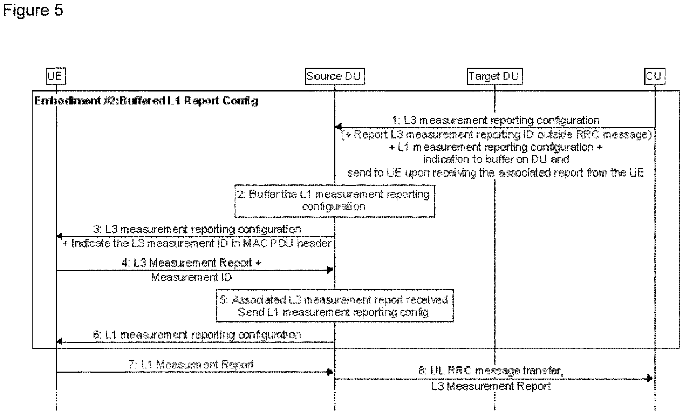

In one proposal, as shown in Figure 5 for background information, a UE is configured with an L3 measurement report event. Once the event is triggered, the UE provides the L3 reports to the DU in a (MAC CE or aperiodic measurement report) message. Then the DU provides a new configuration to the UE.

The following focuses on how to use L3 measurements and proposes a method to provide inter-frequency L3 measurements in a L1 report.

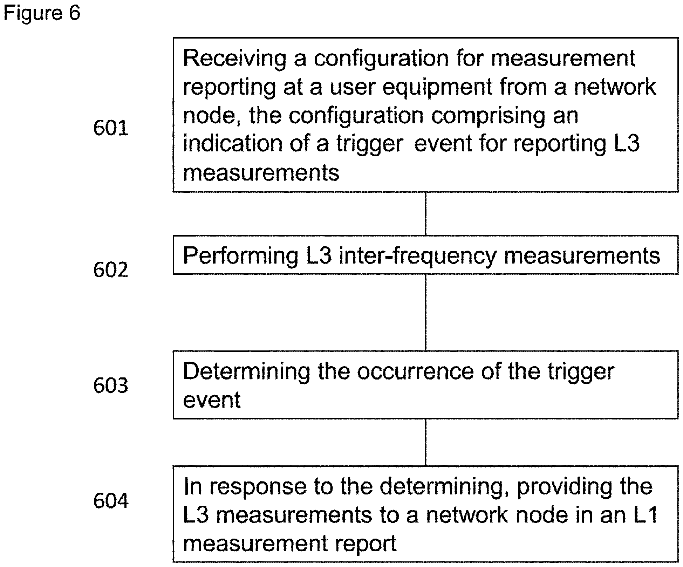

Figure 6 shows a flowchart of a method according to an example embodiment. The method may be performed at a UE.

In 601, the method comprises receiving a configuration for L3 measurement reporting at a user equipment from a network node, the configuration comprising an indication of a trigger event for reporting L3 measurements.

In 602, the method comprises performing the L3 measurements .

In 603, the method comprises determining the occurrence of the trigger event.

In 604, the method comprises, in response to the determining, providing at least one L3 intra-frequency or inter-frequency measurement to the network node in an L1 measurement report.

The network node may be a source DU. A CU may provide the configuration for L3 measurements to the user equipment via the source DU.

In step 602, the UE may perform new measurements, or alternatively UE may use previously performed L3 measurements if the measurements meet accuracy criteria specified in the L3 measurement reporting configuration.

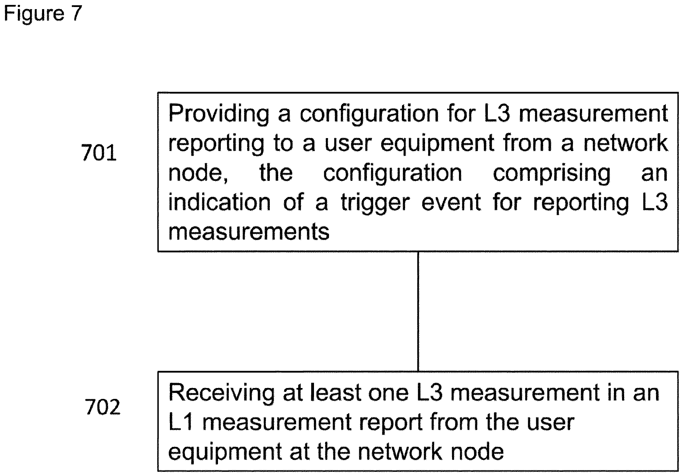

Figure 7 shows a flowchart of a method according to an example embodiment. The method may be performed at a network node, e.g., a source DU.

In 701, the method comprises providing a configuration for L3 measurement reporting to a user equipment from a network node, the configuration comprising an indication of a trigger event for reporting L3 measurements.

In 702, the method comprises receiving at least one L3 measurement in an L1 measurement report from the user equipment at the network node.

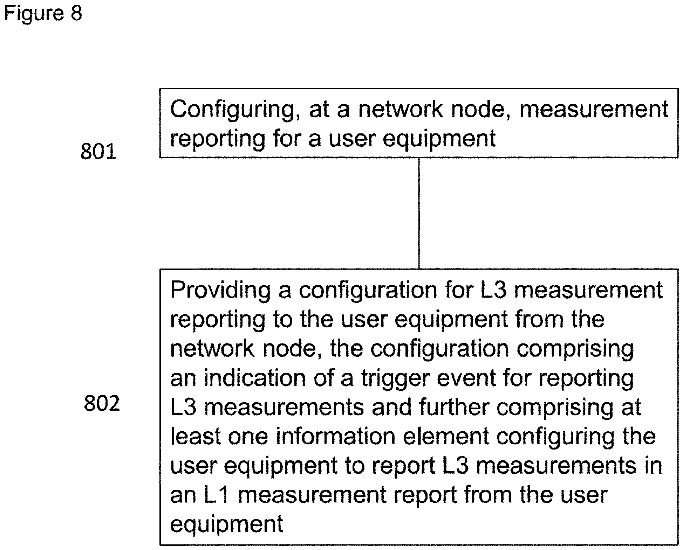

Figure 8 shows a method according to an example embodiment. The method may be performed at network node, such as a CU.

At 801 the method comprises configuring, at a network node, L3 measurement reporting for a user equipment.

At 802, the method comprises providing the configuration for L3 measurement reporting to the user equipment from the network node, the configuration comprising an indication of a trigger event for reporting L3 measurements and further comprising at least one information element configuring the user equipment to report L3 measurements in an L1 measurement report from the user equipment.

The UE may have capability, or the network may have configured the UE, to transmit L3 measurement as L1 measurement in an L1 measurement report. The L3 measurement may comprise L3 measurement information.

UE may perform L3 measurement periodically. Every time UE performs L3 measurements, it can then (at least for certain time as discussed below), use L3 measurements as an input to L1 measurements. In some cases, instead of transmitting L1 measurements, UE may just wrap L3 measurements into a L1 reporting container and transmit them to DU.

For instance, the configuration may explicitly indicate to perform only L3 measurements or it may indicate to perform SSB based LTM measurements in a determined format. The format then may be defined such that UE can transmit L1-measurement reports with L3 measurement information and the network understands it.

It may also be that if no L1-measurement configurations are applied to UE, the UE transmits L3 reports but uses L1-reporting format. This way the measurements are then going to DU instead to CU.

The L3 measurements may comprise inter-frequency and/or intra-frequency measurements. The L1 measurements may comprise inter-frequency and/or intra-frequency measurements.

The configuration may further comprise an indication of candidate target cells for handover, e.g., candidate LTM target cells. The method may comprise performing L1 measurements for the candidate target cells and providing at least one L1 measurement in the L1 measurement report. Alternatively, if no L1-measurement configurations are applied to UE, the UE provides L3 measurements in the L1 measurement report without including L1 measurements.

If one or more conditions is met, instead of, for example, performing L1 measurements the UE may transmit L3 measurement information as L1 measurement report for LTM (i.e., the UE performs translation of L3 measurements to L1 measurements and places them into L1 measurement message container).

The conditions may include
- The UE is required to measure one or more candidate cells for LTM;
- There is less than x amount of time since the latest L3 measurement (e.g., UE may continue measuring after it has transmitted a measurement report).,
- The UE is configured either with immediate, event based or periodical (e.g., semi-persistent) L1 measurement report,
- The L3 measurements fullfill the L1 measurement spatial (e.g., the UE uses the same Rx beam for both L1 and L3 measurement) and evaluation conditions (may cause the network to trigger LTM handover).
- Measured cell is known as defined in TS 38.133

That is, when the L3 or L1 trigger event happens the UE will add the L3 measurement(s) that it performs to the L1 measurement report.

The method may comprise receiving at least one L1 measurement for the candidate target cells in the L1 measurement report from the user equipment.

That is, the UE may continue to perform L1 measurements for the candidate target cells but instead of providing L1 measurements only in the L1 measurement report, the L1 measurement report will include L3 measurements. Alternatively, the UE may not need to perform L1 measurements (e.g., because cell switch has not yet happened) and may provide L3 measurements in the L1 measurement report without including L1 measurements.

The UE may continue transmitting L3 measurements as L1 measurements in L1 measurement reports until MAC CE indicates the cell switch or X times since the L3 measurements and UE is not configured to continue perform continuous measurements. Alternatively, or in addition, a leaving condition event may be configured for the UE to stop providing L3 measurements in L1 measurement reports.

In one example embodiment UE may continue to perform L3 measurements and transmitting them as L1 measurements.

The trigger event may be an L3 trigger event (e.g., TargetCell_L3_RSRP > Thresh) or L1 trigger event.

For example, the trigger may be L3 measurement trigger condition. In this example, when L3 measurements are triggered, UE transmits a L1 measurement report format that includes L3 measurement.

In another example, the trigger event may be the L1 measurement trigger condition.

In this example, when L1 measurement is triggered, UE transmits L3 measurements in the L1 measurement report formation.

If there is no L1-measurement configuration but UE is configured with LTM, the UE transmits L3 measurements in L1-measurement report format.

The method may comprise providing an indication, e.g., a flag, to the network node from the user equipment that the L3 intra-/inter-frequency measurements are L3 measurements. In one example embodiment, UE adds an indication to the L1 measurement report, which indicates that the L3 inter-frequency measurements are L3 measurements. A method at a network node may comprise distinguishing L3 measurements from L1 measurements on the basis of the received indication. This means that the DU can process these measurements as L3 measurements instead of L1 measurements.

A method at a network node may comprise selecting a new serving cell for the user equipment on the basis of the at least one L3 measurement.

The method may comprise selecting the new serving cell based on the at least one L3 measurement if L3 measurement is above a certain threshold, L3 measurement is above a certain threshold and L1 measurement report of the serving (and non serving target) cell is below a threshold or L3 is above or below L1 intra-frequency measurement summed with a configured bias (the configured bias may depend on at least one of carrier frequency, load, service or any other suitable parameter)

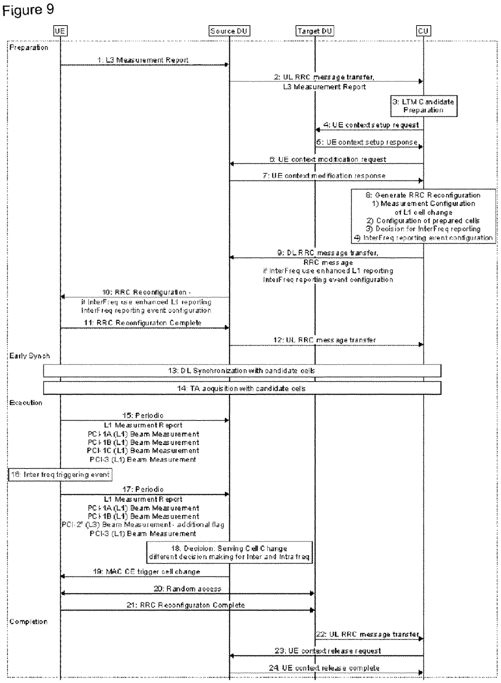

Figure 9 shows an example signalling diagram for providing L3 measurements in L1 report.

Steps 1 to 7 are as shown in Figure 4.

In steps 8-12, the CU prepares the RRC Configuration and provides it to the UE. The RRC Configuration contains the Decision to configure the UE with L3 measurement reporting, as well as the event to start the reporting (e.g., TargetCell_L3_RSRP > Thresh). This is an example of providing a configuration for L3 measurement reporting to a user equipment from a network node, the configuration comprising an indication of a trigger event for reporting L3 measurements.

The UE stores the configuration of LTM candidate target cell(s) and transmits a RRCReconfigurationComplete message to the CU.

Steps 13 to 15 are as in Figure 4. The measurement reports in step 15 contains only L1 measurements since the L3 trigger event for reporting is not satisfied.

In step 16, the L3 trigger event is satisfied, i.e., TargetCell_L3_RSRP > Thresh for a target cell. This is an example of determining the occurrence of the trigger event.

In step 17, the UE performs L1 measurements for the configured LTM candidate target cell(s) and L3 measurements (for all cells). If the cells are in the InterFreq cells configured for LTM the UE will include them in the lower-layer (L1) measurement reports to the source DU. This measurement report contains both L1 and L3 measurements. This is an example of providing the L3 measurements to a network node. The L3 measurements are marked respectively with a flag.

In steps 18 and 19, the Source DU decides considering both L1 and L3 frequency measurements about the target cell and indicates it with a MAC CE. This is an example of determining to change the serving cell for the user equipment based on the L3 measurements.

Let us now consider a case where the L1 measurements are intra-frequency measurements while the L3 measurements are inter-frequency measurements. A similar approach applies to a more general situation of inter and intra-frequency measurements. The network (e.g., DU) possesses L1 measurements of cell 1, and 3, and L3 measurements of cell 2 at the time of making decision (the L1 and L3 measurements received in the L1 measurement report). In such a case, the network may prioritize the intra-frequency handover to the target cell 1 or 3 over the inter-frequency handover to the target cell 2 because of a faster switching procedure. The prioritization may be understood such that if the L1 intra-frequency and L3 inter-frequency measurements indicate performance on the same level, the intra-frequency handover may be selected. Thresholds may be provided such that even a slightly lower performance after the intra-frequency handover may be sustained. In other words, if the measurement difference between cell 1 and cell 2 is not greater than delta dB (for example), cell 2 providing the better measured performance, cell 1 would have higher priority to become the target cell because of faster switching procedure. Similarly, a higher priority may be given to L1 intra-frequency measurement than L3 intra-frequency measurement, because more updated measurements are done in L1.

Steps 20 to 24 are as shown in Figure 4.

Table 1 shows an example of an L1 measurement report including inter-frequency L3 measurements, indicated by an inter-frequency flag.

**Table 1**

| Measurement | L3-measurement flag | Explanation |
|---|---|---|
| Cell/Beam A RSRP (or RSRQ) | - | L1 beam measurement of cell 1 |
| Cell/Beam B RSRP (or RSRQ) | - | L1 beam measurement of cell 1 |
| Cell/Beam C RSRP (or RSRQ) | Yes | L3 beam measurement of cell 2 |
| Cell/Beam D RSRP (or RSRQ) | - | L1 beam measurement of cell 3 |

A method as described above with reference to Figures 6 to 9 may enable the provision of L3 measurements in L1 report. The measurement report may be enhanced to contain and differentiate L1 and L3 measurements. An event is provided to be used to trigger the L3 measurement report in L1 measurement. A priority is configured for DU to make determine which measurements to use in decisions for serving cells based on the available reports.

An apparatus may comprise means for means for receiving a configuration for L3 measurement reporting at a user equipment from a network node, the configuration comprising an indication of a trigger event for reporting L3 measurements, means for performing the L3 measurements, means for determining the occurrence of the trigger event; and means for, in response to the determining, providing the L3 measurements to the network node in an L1 measurement report.

The apparatus may comprise the user equipment, such as a mobile phone, be the user equipment or be comprised in the user equipment or a chipset for performing at least some actions of/for the user equipment.

Alternatively, an apparatus may comprise means for providing a configuration for L3 measurement reporting to a user equipment from a network node, the configuration comprising an indication of a trigger event for reporting L3 measurements and means for receiving at least one L3 measurement in an L1 measurement report from the user equipment at the network node.

The apparatus may comprise a network node, be the network node or be comprised in the network node or a chipset for performing at least some actions of/for the network node. The network node may implement a DU.

Alternatively, an apparatus may comprise means for configuring, at a network node, L3 measurement reporting for a user equipment and means for providing the configuration for L3 measurement reporting to the user equipment from the network node, the configuration comprising an indication of a trigger event for reporting L3 measurements and further comprising at least one information element configuring the user equipment to report L3 measurements in an L1 measurement report from the user equipment.

The apparatus may comprise a network node, be the network node or be comprised in the network node or a chipset for performing at least some actions of/for the network node. The network node may implement a CU.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems such as 6G networks or 5G-Advanced networks. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media. The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus comprising:
means for receiving a configuration for L3 measurement reporting at a user equipment from a network node, the configuration comprising an indication of a trigger event for reporting L3 measurements;
means for performing the L3 measurements;
means for determining the occurrence of the trigger event; and
means for, in response to the determining, providing the L3 measurements to the network node in an L1 measurement report.

2. The apparatus according to claim 1, wherein the configuration further comprises an indication of candidate target cells for handover and comprising means for performing L1 measurements for the candidate target cells and means for providing at least one L1 measurement in the L1 measurement report.

3. The apparatus according to claim 1 or claim 2, comprising means for providing an indication to the network node that the L3 measurements in the L1 measurement report are L3 measurements.

4. The apparatus according to any of claims 1 to 3, wherein the trigger event is an L3 trigger event or L1 trigger event.

5. The apparatus according to any one of claims 1 to 4, wherein the L3 measurements are inter-frequency or intra-frequency measurements.

6. An apparatus comprising:
means for providing a configuration for L3 measurement reporting to a user equipment from a network node, the configuration comprising an indication of a trigger event for reporting L3 measurements; and
means for receiving at least one L3 measurement in an L1 measurement report from the user equipment at the network node.

7. The apparatus according to claim 6, comprising means for selecting a new serving cell for the user equipment on the basis of the at least one L3 measurement.

8. The apparatus according to claim 6 or claim 7, wherein the configuration further comprises an indication of candidate target cells for handover and the apparatus further comprises means for receiving at least one L1 measurement for the candidate target cells in the L1 measurement report from the user equipment, and means for selecting a new serving cell for the user equipment on the basis of at least one of the at least one L3 measurement and at least one L1 measurement.

9. The apparatus according to claim 8, comprising means for selecting the new serving cell based on the at least one L3 measurement if the at least one L3 measurement is above a certain threshold, if the at least one L3 measurement is above a certain threshold and the at least one L1 measurement of a serving cell and a non serving target cell is below a threshold or if the at least one L3 measurement is above or below the at least one L1 measurement summed with a configured bias.

10. The apparatus according to any of claims 6 to 9, comprising means for receiving an indication at the network node from the user equipment that the L3 measurements are L3 measurements, and further comprising means for distinguishing L3 measurements from L1 measurements on the basis of the received indication.

11. The apparatus according to any one of claims 6 to 10, wherein the apparatus is for a distributed unit of a cellular network.

12. The apparatus according to any of claims 6 to 11, wherein the trigger event is an L3 trigger event or L1 trigger event.

13. A method comprising:
receiving a configuration for L3 measurement reporting at a user equipment from a network node, the configuration comprising an indication of a trigger event for reporting L3 measurements;
performing the L3 measurements;
determining the occurrence of the trigger event; and
in response to the determining, providing the L3 measurements to the network node in an L1 measurement report.

14. A method comprising:
providing a configuration for L3 measurement reporting to a user equipment from a network node, the configuration comprising an indication of a trigger event for reporting L3 measurements; and
receiving at least one L3 measurement in an L1 measurement report from the user equipment at the network node.

15. An apparatus comprising at least one processor and at least one memory storing instructions that, when executed by the at least one processor, cause the apparatus at least to:
configure, at a network node, L3 measurement reporting for a user equipment; and provide the configuration for L3 measurement reporting to the user equipment from the network node, the configuration comprising an indication of a trigger event for reporting L3 measurements and further comprising at least one information element configuring the user equipment to report L3 measurements in an L1 measurement report from the user equipment.
